**Europäisches Patentamt**

**European Patent Office**

**Office européen des brevets**

(11) Veröffentlichungsnummer: **0 087 085**
**A2**

(12) **EUROPÄISCHE PATENTANMELDUNG**

(21) Anmeldenummer: **83101336.2**

(22) Anmeldetag: **11.02.83**

(51) Int. Cl.³: **B 23 B 51/00**

(30) Priorität: **22.02.82 DE 3206387**

(43) Veröffentlichungstag der Anmeldung:
**31.08.83 Patentblatt 83/35**

(84) Benannte Vertragsstaaten:
**AT CH FR GB LI**

(71) Anmelder: **HILTI Aktiengesellschaft**

**FL-9494 Schaan(LI)**

(72) Erfinder: **Froehlich, Peter**
**Bahnhofstrasse 2**
**D-8023 Pullach(DE)**

(74) Vertreter: **Berg, Wilhelm, Dr. et al,**
**Dr. Berg, Dipl.-Ing. Stapf, Dipl.-Ing. Schwabe, Dr. Dr.**
**Sandmair Mauerkircherstrasse 45**
**D-8000 München 80(DE)**

(54) Bohrwerkzeug für hinterschnittene Bohrungen.

(57) Bohrwerkzeug zur Herstellung hinterschnittener Bohrungen. In einem von einem Bohrgerät in eine Drehbewegung versetzten Lagergehäuse (1) ist ein Schneidenträger (3) um eine quer zur Längsachse des Lagergehäuses (1) verlaufende Schwenkachse (4) schwenkbar gelagert. Wenn das Lagergehäuse (1) auf der Oberfläche des Aufnahmematerials zur Anlage kommt, wird durch Relativverschiebung zwischen dem Antriebsschaft (6) und dem Lagergehäuse (1) der Schneidenträger (3) ausgelenkt, wobei der mit Schneiden (3c) versehene Schaft (3a) einen Hinterschnitt erzeugt. Das Auslenken des Schneidenträgers (3) wird durch eine Schraube (9) begrenzt. Eine Feder (5) dient dem Zurückbringen des Schneidenträgers (3) in seine Ausgangslage.

Fig. 2

HILTI AKTIENGESELLSCHAFT IN SCHAAN
Fürstentum Liechtenstein


Bohrwerkzeug für hinterschnittene Bohrungen


Die Erfindung betrifft ein Bohrwerkzeug zur Herstellung
hinterschnittener Bohrungen, mit einem von einem Antriebsgerät, wie einem Bohrhammer, einer Schlagbohrmaschine oder
dergleichen, in eine Drehbewegung versetzten Lagergehäuse,
einem um eine quer zur Längsachse des Lagergehäuses verlaufende Schwenkachse schwenkbar gelagerten, sich im wesentlichen in Längsrichtung des Lagergehäuses erstreckenden,
an seinem dem Antriebsgerät abgewandten Ende mit Schneiden
versehenen, als Hebel ausgebildeten Schneidenträger und
einem mit dem Lagergehäuse drehfest und axial verschiebbar
verbundenen, den Schneidenträger beaufschlagenden und dabei radial auslenkenden Antriebsschaft.

Neben durch Klemm- und Spreizkräfte in Bohrungen verankerbaren Befestigungselementen sind in jüngster Zeit auch
durch Formschluss verankerbare Befestigungselemente bekannt geworden. Zur Verankerung dieser formschlüssig verankerbaren Befestigungselemente sind speziell geformte
Bohrungen notwendig. Diese weisen einen sogenannten Hinterschnitt, dh einen im Bohrungsgrund vergrösserten Querschnitt auf. Zur Herstellung dieses Hinterschnitts sind
spezielle Werkzeuge notwendig.

Die bisher zur Herstellung eines Hinterschnitts bekannten
Werkzeuge sind sehr aufwendig und störungsanfällig. In den
meisten Fällen sind diese Werkzeuge zudem nur in Leichtbaustoffen, wie beispielsweise Gasbeton, anwendbar.

Ein bekanntes Bohrwerkzeug weist ein sich in Richtung der
Bohrachse erstreckendes Lagergehäuse auf. In einer Ausnehmung des Lagergehäuses ist ein als Hebel ausgebildeter
Schneidenträger schwenkbar gelagert. Der Schneidenträger
wird von einer mit dem Lagergehäuse drehfest und axial
verschiebbar verbundenen Antriebsschaft beaufschlagt.
Durch diese Beaufschlagung wird der mit Schneiden versehene Teil des Schneidenträgers radial ausgelenkt. Der Nachteil dieses Bohrwerkzeuges besteht darin, dass die Beaufschlagungsstelle zwischen dem Antriebsschaft und dem Schneidenträger und die Schwenkachse des Schneidenträgers praktisch in Achsrichtung fluchtend hintereinander angeordnet
sind. Wird ein Antriebsgerät verwendet, das dem Werkzeug
neben der Drehbewegung auch eine Schlagbewegung erteilt,
wie dies beispielsweise bei einer Schlagbohrmaschine oder
einem Bohrhammer auftritt, so werden die in Achsrichtung
wirkenden Schläge hauptsächlich auf die Schwenkachse des
Schneidenträgers übertragen. Der in radialer Richtung auslenkbare, mit Schneiden versehene Teil des Schneidenträgers
führt praktisch keine Schlagbewegung aus. Das Werkzeug ist
somit für harte Werkstoffe, wie Beton und dergleichen,
nicht einsetzbar.

Der Erfindung liegt die Aufgabe zugrunde, ein Bohrwerkzeug
zur Herstellung hinterschnittener Bohrungen zu schaffen,
das eine geringe Störanfälligkeit aufweist und auch für
harte Aufnahmewerkstoffe einsetzbar ist.

Gemäss der Erfindung wird dies dadurch erreicht, dass der
Schneidenträger das Lagergehäuse an seinem dem Antriebsgerät abgewandten Ende axial überragt und einen im wesentlichen quer zum sich entlang der Drehachse des Lagergehäuses erstreckenden Teil stehenden Hebelarm zur Aufnahme der
Schwenkachse aufweist.

Da der Schneidenträger das Lagergehäuse axial überragt,
kann das Bohrwerkzeug zur Herstellung des gesamten Bohrloches, dh auch für die zuvor zu erstellende, zylindrische
Bohrung verwendet werden. Durch den im wesentlichen quer

zum sich in Längsrichtung des Lagergehäuses erstreckenden Teil stehenden Hebelarm wird die Schwenkachse nach ausserhalb des Bereiches der Schlagübertragung verlegt. Die Schläge werden somit vom Antriebsschaft direkt auf den mit Schneiden versehenen Bereich des Schneidenträgers übertragen. Der Schwenkachse des Schneidenträgers kommt somit im wesentlichen nur noch eine Umlenkfunktion zu.

Für optimale Verhältnisse ist es zweckmässig, dass der radiale Abstand der Schwenkachse von der Längsachse des Schneidenträgers das 0,2 bis 0,5-fache des axialen Abstandes der Schwenkachse vom schneidenseitigen Ende des Schneidenträgers beträgt. Durch dieses Verhältnis sind die Kraft- und Wegverhältnisse beim Ausschwenken des Schneidenträgers optimal.

Nach der Herstellung des Hinterschnitts muss der Schneidenträger wieder in seine Ausgangsstellung zurückgebracht werden, damit das Bohrwerkzeug aus dem rückwärtigen, einen geringeren Querschnitt aufweisenden Bereich der Bohrung herausgezogen werden kann. Damit der Schneidenträger selbsttätig wieder in seine Ausgangsstellung zurückkehrt, ist es daher vorteilhaft, dass der Schneidenträger gegen die Kraft eines Federelementes schwenkbar ist. Je nach Anordnung des Federelementes kann dieses als Zug- oder Druckfeder ausgebildet werden. Die Kraft der Feder kann relativ gering sein.

Ein häufiger Werkzeugwechsel kann vermieden werden, wenn das zuvor zu erstellende, zylindrische Bohrloch mit demselben Werkzeug hergestellt wird. Um bei der Herstellung des zylindrischen Bohrloches ein Ausschwenken des Schneidenträgers zu vermeiden, ist zweckmässigerweise eine Feststellvorrichtung zur Begrenzung der Schwenkbarkeit des Schneidenträgers vorgesehen. Die Feststellvorrichtung kann beispielsweise durch eine Schraube oder einen verstellbaren Anschlag gebildet werden. Für die Handhabung ist lediglich erforderlich, dass die Feststellvorrichtung von aussen ohne grossen Aufwand umgestellt werden kann.

Die Erfindung soll nachstehend anhand der sie beispielsweise wiedergebenden Zeichnungen näher erläutert werden.
Es zeigen:

    Fig. 1      Ein erfindungsgemässes Bohrwerkzeug in Aus-
                   gangsstellung,

    Fig. 2      das Bohrwerkzeug gemäss Fig. 1 mit ausgelenktem Schneidenträger.

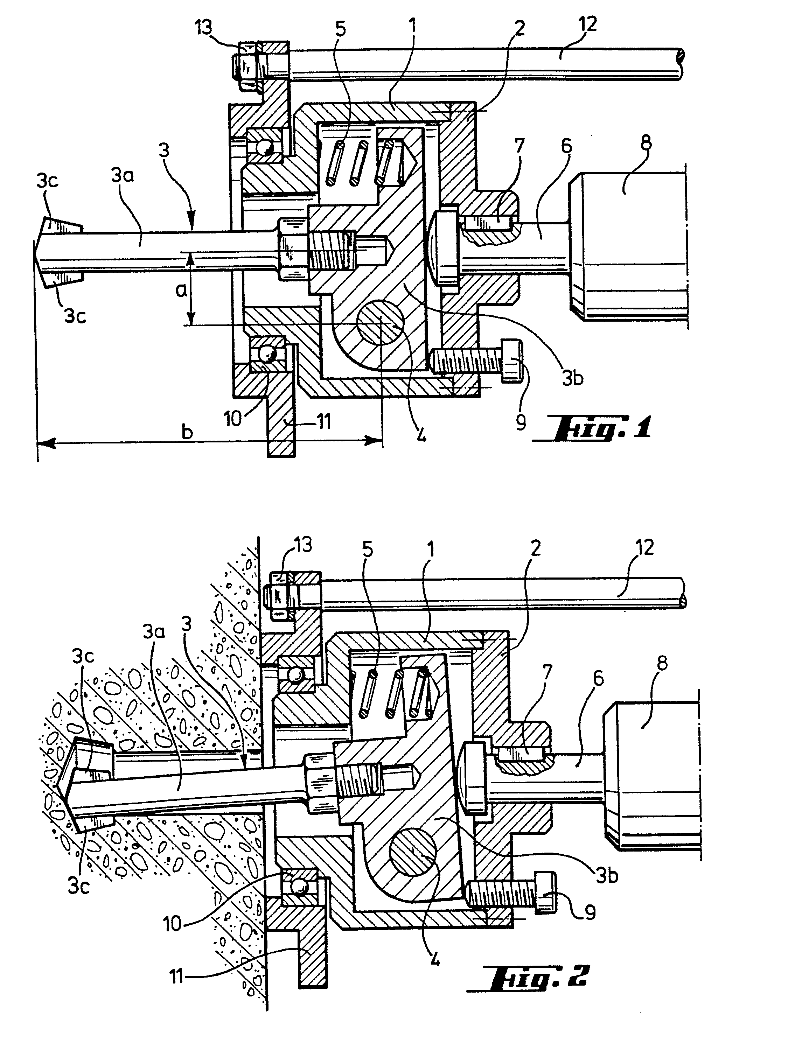

Das aus Fig. 1 und 2 ersichtliche Bohrwerkzeug weist ein
Lagergehäuse 1 auf. Ein Deckel 2 ist zu Montagezwecken
lösbar mit dem Lagergehäuse 1 verbunden. Im Lagergehäuse 1
ist ein insgesamt mit 3 bezeichneter Schneidenträger angeordnet. Der Schneidenträger 3 weist einen sich in Längsrichtung des Bohrwerkzeuges erstreckenden, das Lagergehäuse 1
axial überragenden Schaft 3a sowie einen sich quer zum
Schaft 3a erstreckenden, im Lagergehäuse 1 angeordneten
Hebelarm 3b auf. Das vordere Ende des Schafts 3a ist mit
Schneiden 3c versehen. Der Schneidenträger 3 ist um eine
quer zur Längsachse verlaufende Schwenkachse 4 schwenkbar
gelagert. Auf der der Schwenkachse 4 gegenüberliegenden
Seite des Schneidenträgers 3 ist eine Feder 5 angeordnet.
Durch die Feder 5 wird der Schneidenträger 3 gegen einen
mit dem Lagergehäuse 1 drehbar, jedoch axial verschiebbar
verbundenen Antriebsschaft 6 gedrückt. Eine Passfeder 7
dient der Drehmomentübertragung vom Antriebsschaft 6 auf
den Deckel 2 bzw das Lagergehäuse 1. Das vordere Ende des
Antriebschafts 6 ist kugelkalottenförmig ausgebildet. Das
rückwärtige Ende des Antriebsschaftes ist von einem Werkzeughalter 8 aufgenommen. In den Deckel 2 ist eine Schraube 9 eingeschraubt. Diese dient als Anschlag für den Schneidenträger 3. Die Schwenkbarkeit des Schneidenträgers 3
wird somit einerseits durch den Antriebsschaft 6 und andererseits durch die Schraube 9 begrenzt. Durch Anziehen der
Schraube 9 wird der Schneidenträger 3 in der in Fig. 1
dargestellten Lage fixiert. Das Bohrwerkzeug kann somit in
dieser Stellung wie ein normales Bohrwerkzeug zum Bohren
zylindrischer Bohrlöcher verwendet werden. Das Lagergehäu-

ft 1 ist über ein Lager 10 in einem Lagerschild 11 gelagert. Der Lagerschild 11 ist über eine oder mehrere Stangen 12 drehfest, jedoch axial verschiebbar mit der Antriebsmaschine verbunden. Die Stangen 12 sind durch Muttern 13
mit dem Lagerschild 11 verschraubt. Bei der Herstellung
von zylindrischen Bohrlöchern dient der Lagerschild 11
auch als Tiefenanschlag. Der radiale Abstand a der Schwenkachse 4 von der Längsachse des Schneidenträgers 3 beträgt
etwa das 0,2- bis 0,5-fache des axialen Abstandes b der
Schwenkachse 4 vom schneidenseitigen Ende des Schneidenträgers 3.

Wenn die Schneide 3c die vorgesehene Tiefe erreicht hat,
dh wenn der Lagerschild 11 an der Oberfläche des Aufnahmematerials zur Anlage kommt, kann, wie in Fig. 2 dargestellt,
die Schraube 9 gelöst werden. Durch axiales Verschieben
des Antriebschaftes 6 gegenüber dem Lagergehäuse 1 kann
nun der Schneidenträger 3 entgegen der Kraft der Feder 5
ausgelenkt werden. Die Schraube 9 dient dabei als Anschlag
zur Begrenzung des Ausschwenkens des Schneidenträgers 3.
Beim Zurückziehen des Antriebschaftes 6 wird der Schneidenträger 3 durch die Feder 5 wiederum in die in Fig. 1 dargestellte Ausgangslage zurückgeschwenkt. Sodann kann das
Bohrwerkzeug aus dem zylindrischen Teil der Bohrung herausgezogen werden. Zur Herstellung der nächsten zylindrischen
Bohrung muss sodann die Schraube 9 wiederum angezogen werden. Dadurch wird der Schneidenträger 3 fixiert.

0087085

HILTI AKTIENGESELLSCHAFT IN SCHAAN
Fürstentum Liechtenstein

## Patentansprüche

1. Bohrwerkzeug zur Herstellung hinterschnittener Bohrungen, mit einem von einem Antriebsgerät, wie einem Bohrhammer, einer Schlagbohrmaschine oder dgl, in eine Drehbewegung versetzten Lagergehäuse, einem um eine quer zur Längsachse des Lagergehäuses verlaufende Schwenkachse schwenkbar gelagerten, sich im wesentlichen in Längsrichtung des Lagergehäuses erstreckenden, an seinem dem Antriebsgerät abgewandten Ende mit Schneiden versehenen, als Hebel ausgebildeten Schneidenträger und einem mit dem Lagergehäuse drehfest und axial verschiebbar verbundenen, den Schneidenträger beaufschlagenden und dabei radial auslenkenden Antriebsschaft, d a d u r c h  g e k e n n z e i c h n e t , dass der Schneidenträger (3) das Lagergehäuse (1) an seinem dem Antriebsgerät abgewandten Ende axial überragt und einen im wesentlichen quer zum sich entlang der Drehachse des Lagergehäuses (1) erstreckenden Teil stehenden Hebelarm (3b) zur Aufnahme der Schwenkachse (4) aufweist.

2. Bohrwerkzeug nach Anspruch 1, dadurch gekennzeichnet, dass der radiale Abstand (a) der Schwenkachse (4) vor der Längsachse des Schneidenträgers (3) das 0,2- bis 0,5-fache des axialen Abstandes (b) der Schwenkachse (4) vom schneidenseitigen Ende des Schneidenträgers (3) beträgt.

3. Bohrwerkzeug nach einem der Ansprüche 1 oder 2, dadurch gekennzeichnet, dass der Schneidenträger (3) gegen die Kraft eines Federelementes (5) schwenkbar ist.

4. Bohrwerkzeug nach einem der Ansprüche 1 bis 3, dadurch gekennzeichnet, dass eine Feststellvorrichtung (9) zur Begrenzung der Schwenkbarkeit des Schneidenträgers (3) vorgesehen ist.

**Fig. 1**

**Fig. 2**